# EUROPÄISCHE PATENTSCHRIFT

(11) **EP 2 593 641 B1**
(45) Veröffentlichungstag und Bekanntmachung des Hinweises auf die Patenterteilung: **14.12.2016**
(21) Anmeldenummer: 11732456.6
(22) Anmeldetag: 14.07.2011
(51) Int. Cl.: E21B 47/08, E21B 33/14, F24J 3/08

(54) **VERFAHREN ZUR HINTERFÜLLUNG EINES BOHRLOCHS UND ANORDNUNG DAFÜR**
PROCESS FOR BACKFILLING A BOREHOLE AND ARRANGEMENT THEREFOR
PROCÉDÉ POUR REMBLAYER UN TROU DE FORAGE ET SYSTÈME CORRESPONDANT

(30) Priorität: 15.07.2010 DE 102010036411
(43) Veröffentlichungstag der Anmeldung: 22.05.2013
(73) Patentinhaber: Geowatt AG, 8050 Zürich (CH)
(72) Erfinder: MÉGEL, Thomas, CH-8005 Zürich (CH); ROHNER, Ernst, CH-9212 Arnegg (CH)
(74) Vertreter: Hansen, Jochen
(86) Internationale Anmeldenummer: PCT/EP2011/062083
(87) Internationale Veröffentlichungsnummer: WO 2012/007556

(56) Entgegenhaltungen:
- FR-A5- 2 082 093
- US-A- 3 202 213
- US-A- 4 346 594
- US-A- 4 571 993
- US-A- 4 669 541
- US-A- 5 526 879
- US-A1- 2004 031 585
- US-A1- 2009 200 079

## Beschreibung

Die Erfindung betrifft ein Verfahren zur Hinterfüllung eines in ein Bohrloch eingebrachten Funktionselementes, bei dem ein Hinterfüllungsmaterial über wenigstens ein zum Fuss des Funktionselementes, bevorzugt bis zur Bohrlochsohle, geführtes Injektionsrohr von einer außerhalb des Bohrlochs angeordneten Injektionspumpe in das Bohrloch injiziert wird. Ferner betrifft die Erfindung eine Anordnung zur Durchführung des Verfahrens mit einem Bohrloch, einem im Bohrloch eingeführten Funktionselement, wenigstens einem Injektionsrohr im Bohrloch, das bis zum Fuss des Funktionselementes, bevorzugt bis zur Bohrlochsohle führt, einer Injektionspumpe, die außerhalb des Bohrlochs angeordnet ist, mit einem Hinterfüllungsmaterial beaufschlagbar ist und an der wenigstens ein Injektionsrohr angeschlossen ist, wobei zwischen Injektionspumpe und Injektionsrohr mindestens ein Drucksensor und mindestens ein Fließratensensor angeordnet sind.

Bohrlöcher im Untergrund dienen unterschiedlichen Zwecken, die durch eingefügte Funktionselemente erfüllt werden. Teils sind Bohrlöcher auch einfach nach Ablauf der Nutzungsdauer entsprechend zu verschließen. Zudem dürfen Bohrlöcher verschiedene Grundwasserstockwerke nicht miteinander verbinden (Grundwasserschutz). Entsprechend sind Funktionselemente nach deren Einbringung in Bohrlöcher zu hinterfüllen bzw. sind Bohrlöcher nach Ablauf ihrer Nutzungsdauer zu hinterfüllen bzw. zu verfüllen. Dazu ist es bekannt, ein Injektionsrohr bis zum Fuss des Funktionselementes, meist knapp über der Bohrlochsohle, niederzubringen und von der Erdoberfläche mit einer Pumpe ein Hinterfüllungsmaterial in das Bohrloch über das Injektionsrohr einzubringen. Dabei tritt das Hinterfüllungsmaterial am abwärtigen Ende des Injektionsrohres nahe des Fusses des Funktionselementes aus und steigt im Bohrloch bis zum Bohrlochkopf oder einer vorgegebenen Steighöhe auf. In einigen Fällen wird die Verfüllung auch vom tiefsten Punkt zum oberflächennahsten Punkt stufen- bzw. abschnittsweise durchgeführt.

Dabei ist mit Funktionselement ein in das Bohrloch einzuführendes Bauteil gemeint, das mit einer entsprechenden Hinterfüllung im Bohrloch verankert werden soll. Somit kann Funktionselement eine Bohrlochverrohrung, auch ein Filterrohr, ein U-Rohr, wie es für Erdwärmesonden verwendet wird, sowie im Bohrloch fest zu verankernde Messsysteme oder dergleichen sein.

Für die Erdwärmenutzung sind sogenannte Erdwärmesonden bekannt, zu deren Erstellung meistens ein oder zwei U-Rohre in ein Bohrloch, meist bis zur Bohrlochsohle, eingebracht werden. Durch die U-Rohre wird eine Wärmeträgerflüssigkeit von der Erdoberfläche bis zur Bohrlochsohle und wieder nach oben gefördert. Dabei wird dem Untergrund Wärme entzogen oder für Kühlungen Wärme eingebracht. Der Wärmeübergangswiderstand zwischen dem Untergrund und der Wärmeträgerflüssigkeit soll möglichst gering sein. Da, wie eingangs bereits dargestellt, das Bohrloch zudem verschiedene Grundwasserstockwerke nicht miteinander verbinden darf, wird der Zwischenraum zwischen den U-Rohren der Erdwärmesonde und der Bohrlochwand mit einem geeigneten Hinterfüllungsmaterial, beispielsweise ein gut wärmeleitendes Zement-Zuschlagstoffgemisch, verfüllt.

Diese bekannten Verfahren zur Hinterfüllung von Bohrlöchern erlauben keine Aussage über die Qualität der erstellten Hinterfüllung. Bei der Injektion wird lediglich darauf gewartet, bis das über die Injektionsrohre injizierte Hinterfüllungsmaterial soweit im Bohrloch ansteigt, dass es die Oberfläche, also den Bohrlochkopf erreicht. Abweichungen vom Bohrlochdurchmesser, das Vorhandensein von Klüften oder anderen Störungszonen im Bereich des Bohrlochs sowie Eigenschaften des eingebauten Funktionselementes werden ebenfalls nicht erfasst.

Die US 4 346 594 A beschreibt ein Verfahren zur Tiefenbestimmung eines Strömungskurzschlusses über eine defekte Gewindeverbindung des Bohrstranges (washout) oder eines Ausspülbereichs (leach zone), bei dem Bohrlochflüssigkeit in den Untergrund migriert, während der Bohrtätigkeit. Dabei werden der momentane Zirkulationsdruck sowie die Fließrate der austretenden Bohrlochflüssigkeit am Bohrlochkopf gemessen. Während des Bohrfortschritts liegt eine stetige Zirkulation der Bohrlochflüssigkeit vor. Entsprechend erfolgt eine stationäre Druckbetrachtung für den jeweiligen geschlossenen Zirkulationszustand. Entsprechend wird für die Auswertung der Druck gegenüber der Tiefe dargestellt. Ferner wird ein normal zu erwartender Zirkulationsdruck ermittelt. Liegt nun ein geringerer Druck als der normal zu erwartende Zirkulationsdruck vor, liegt bei vollständiger Rückkehr der Bohrlochflüssigkeit ein "washout" bzw. bei Verlust von Bohrlochflüssigkeit eine "leach zone" im Untergrund vor.

Zur Tiefenbestimmung der jeweiligen Störung (washout oder leach zone) wird nun der aufgrund der Bohrlochflüssigkeitszirkulation entstehende Druckverlust entlang des Fließweges (gegenüber der Tiefe) betrachtet und daraus die Tiefenlage ermittelt. Dabei fehlt bei einem Strömungskurzschluss über eine defekte Gewindeverbindung des Bohrstranges (washout) der tiefere Strömungsweg über den Bohrkopf und den unteren Teil des Bohrlochringraumes, womit ein entsprechend verringerter Zirkulationsdruck einhergeht. Analog verringert sich bei einer Migration von Bohrlochflüssigkeit in den Untergrund (leach zone) der Zirkulationsdruck, da der Strömungsweg der Bohrlochflüssigkeit über den Ringraum bis an die Oberfläche fehlt, was eben einen der Tiefe nach charakteristischen Druckverlust darstellt.

Ein Verfahren zum Einbau einer Erdwärmesonde bzw. für die Instandsetzung einer Erdwärmebohrung ist aus der DE 10 2007 016 682 B3 bekannt. Dabei wird der äußere Ringraum einer Bohrung mit eingesetzter U-Rohr-förmiger Erdwärmesonde von einem im Bohrloch eingeführten Manschettenrohr mit einem Bindemittel verfüllt. In das Manschettenrohr wird ein Hochdruckschlauch mit zwei Packern hinabgelassen und über Durchtrittsöffnungen im Manschettenrohr der Ringraum und den umgebenden Boden mit dem unter Hochdruck zugeführten Bindemittel verfüllt. Damit kann eine Erdwärmesonde durch die Einbringung eines Manschettenrohrs mit Hochdruckschlauch und zwei Packern auch in Bohrungen eingebaut werden, die in erster Linie zur Untergrundstabilisierung durch eine Hochdruckinjektion eines Bindemittels dienen. Eine Erfassung oder Auswertung von physikalischen Parametern erfolgt hier nicht.

Aus der EP 0 048 342 B1 ist ein Verfahren und eine Vorrichtung zum Abgeben eines Druckmediums, das von einer Pumpeneinrichtung mit sich änderndem Druck gefördert wird, bekannt, bei der der jeweilige Injektionsdruck erfasst wird. Dabei dient die Injektionsdrucksteuerung lediglich zur Vermeidung von Druckspitzen während der Injektion, also zur Schonung der an der Injektion beteiligten Bauteile sowie dem zu füllenden Verankerungsbohrloch.

Aus CH 609 423 A5 sind Anordnungen zum Einpressen von Injektionsgut von in Tunnelwänden aus eingebrachten Bohrungen zur Stabilisierung des Tunnelprofils bekannt. Dabei wird der Druck und der Volumenfluß gemessen und daraus die Fördermenge des Injektionsgutes geregelt. Mit der Anordnung soll eine gleichzeitige Injektion in eine große Anzahl von Bohrlöchern möglich gemacht werden, wobei sowohl der Injektionsfluß als auch der Einpressdruck für jedes einzelne Bohrloch während des Injektionsvorganges unabhängig gesteuert werden können. Es wird allein die Totalmenge des Injektionsgutes als einzigen rechnerisch abgeleiteten Wert aus den gemessenen Daten angegeben.

Die US 3,202,213 A beschreibt eine Vorrichtung und Verfahren zur Hinterfüllung von Verrohrungen mit großem Durchmesser in Bohrlöchern. Dabei wird die Injektionsrate gemessen und der Pumpdruck beim Betrieb der Anlage geregelt.

Aus der US 4,669,541 A ist eine Stufenzementiereinrichtung bekannt, mit der ein Zweistufenzementiervorgang ausgeführt werden kann.

Die US 4,571,993 beschreibt ein Zementiersystem, bei dem die Fließrate sowie die Dichte der einzupressenden Flüssigkeit gemessen wird. Ferner wird auch der Injektionsdruck am Bohrlochkopf gemessen. Optional wird auch die Viskosität des Hinterfüllungsmaterials gemessen.

Aufgabe der Erfindung ist es, auf einfache Weise während des Injektionsvorgangs Eigenschaften des Bohrlochs, des eingebauten Funktionselementes und der Hinterfüllung zu ermitteln. Gelöst wird diese Aufgabe verfahrensgemäß mit den Merkmalen von Anspruch 1 und vorrichtungsgemäß mit den Merkmalen von Anspruch 9.

Damit können aus den gemessenen Daten unter Berücksichtigung des Standes der Hinterfüllung im Bohrloch, der Reibung im Injektionsrohr, der Reibung an der Bohrlochwand und an etwaigen Funktionselementen, beispielsweise der Verrohrung oder dem U-Rohr einer Erdwärmesonde, und der Dichte und Viskosität des Hinterfüllungsmaterials die Eigenschaften des hinterfüllten Bohrlochs und der eingebrachten Hinterfüllung ermittelt werden. Dafür können bekannte analytische oder numerische Verfahren für die Druck- und Druckverlustberechnung herangezogen werden.

Wenn die Dichte und Viskosität des Hinterfüllungsmaterials gemessen werden, können die als bekannt vorausgesetzten Werte für Dichte und Viskosität des Hinterfüllungsmaterials durch die tatsächlich gemessenen ersetzt werden, was die Genauigkeit der Berechnung erhöht. Bevorzugt ist dafür zwischen Injektionspumpe und Injektionsrohr eine Dichte- und Viskositätsmessvorrichtung angeordnet.

Alternativ werden die Dichte und Viskosität des Hinterfüllungsmaterials aus den gemessenen Daten für Injektionsdruck und Injektionsrate rechnerisch abgeleitet. Dazu werden bekannte Gleichungen für den Rohrreibungsdruckverlust verwendet und die Werte für Dichte und Viskosität in einem iterativen Verfahren dem gemessenen, anfänglichen Injektionsdruckverlauf angepasst.

Dadurch, dass aus den gemessenen Daten für Injektionsdruck und Injektionsrate der tiefenabhängige Bohrlochdurchmesser bestimmt wird, kann der Bohrlochdurchmesser über die Tiefe für das gerade hinterfüllte Bohrloch ermittelt werden. Ebenso wird aus den gemessenen Daten für Injektionsdruck und Injektionsrate die Tiefenlage von durchlässigen Klüften bestimmt.

Die gemessenen Daten erlauben auch Rückschlüsse über das in den durchlässigen Klüften aufgenommene Volumen an Hinterfüllungsmaterial. Ferner können die Eigenschaften der eingebauten Funktionselemente, wie beispielsweise Undichtigkeiten, bestimmt werden. Ebenfalls lassen sich Eigenschaften des Hinterfüllungsmaterials ermitteln. Bei einer sehr hohen Auflösung der Messdaten ist es sogar möglich, aus den gemessenen Daten für Injektionsdruck und Injektionsrate die Rauhigkeit der Bohrlochwand zu bestimmen.

Vorrichtungsgemäß sind Erfassungs- und Auswertemittel mit Wirkverbindungen zu mindestens einem Drucksensor und einem Fließratensensor vorgesehen. Die Daten des Drucksensors und des Fließratensensors werden kontinuierlich oder in hoher Taktzahl während des gesamten Hinterfüllungsvorgangs gemessen und an das Erfassungsmittel über die Wirkverbindung übermittelt. Das Erfassungsmittel speichert die Daten und stellt sie einem Auswertemittel zur Verfügung. Das Auswertemittel enthält die erforderlichen analytischen oder numerischen Verfahren zur Berechnung der gewünschten Auswerteergebnisse. Bevorzugt ist das Erfassungs- und Auswertemittel ein Computer.

Nachfolgend werden Berechnungen des theoretischen Injektionsdruckes an einem Beispiel mit drei Variationen anhand der beiliegenden Figuren beschrieben.

Darin zeigt
- Fig. 1: ein Bohrloch mit einem konstanten Bohrlochradius von 68 mm,
- Fig. 2: ein Bohrloch mit einem im mittleren Tiefenbereich vergrößerten Radius,
- Fig. 3: ein Bohrloch mit einem über die gesamte Tiefe vergrößerten Radius von 80 mm und
- Fig. 4: der berechnete theoretische Injektionsdruck für die drei Bohrlochvariationen gemäß Fig. 1 bis 3 über der Injektionszeit.

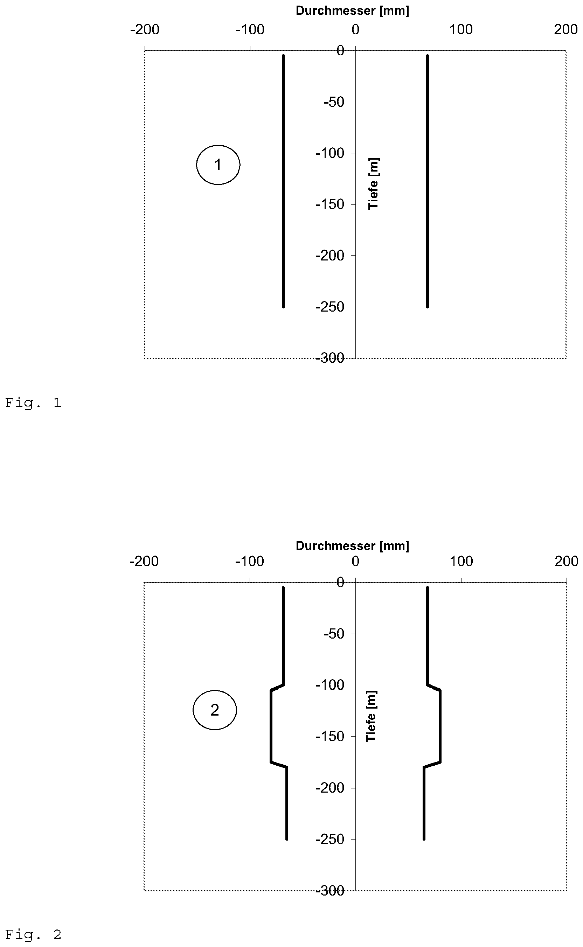

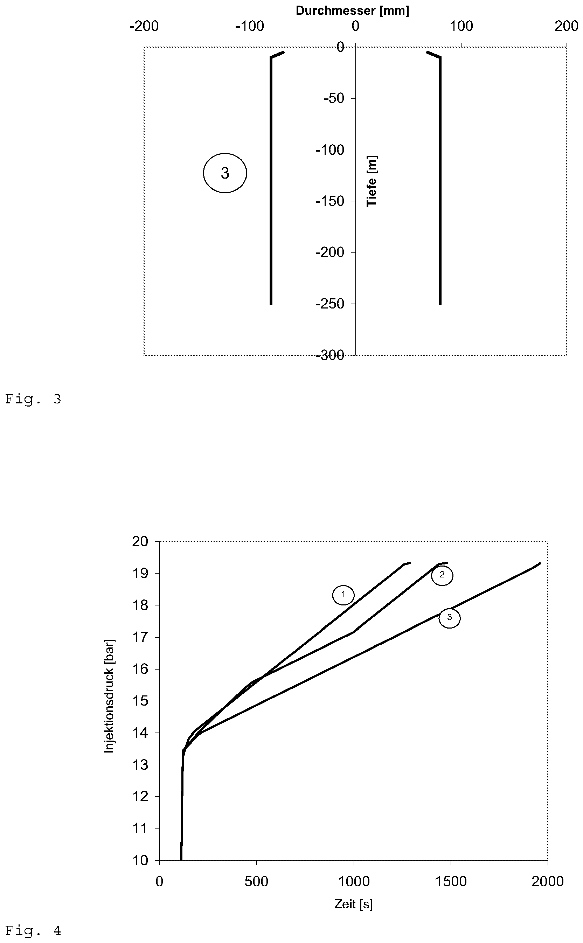

In Fig. 1 ist das Kaliber eines Bohrlochs mit einem Bohrlochradius von 68 mm und 250 m Tiefe dargestellt. In Fig. 2 weist das dort dargestellte Bohrloch im Bereich von ca. 100 - 175 m eine Bohrlocherweiterung auf 80 mm auf. Im übrigen entspricht dieses Bohrloch dem in Fig. 1 dargestellten. In Fig. 3 ist das Kaliber des Bohrlochs über den gesamten Tiefenbereich auf 80 mm erweitert.

Zu diesen drei Variationen erfolgte eine theoretische Injektionsdruckberechnung. Dafür wurden folgende Voraussetzungen festgelegt:
- Tiefe des Bohrlochs 250 m,
- Injektionsrate des Hinterfüllungsmaterials 2 l/s,
- Dichte des Hinterfüllungsmaterials 1.240 kg/m³,
- Viskosität des Hinterfüllungsmaterials 2,9 x 10⁶m²/s,
- vorgegebener Durchmesser der eingebauten U-Rohre (Erdwärmesonde),
- vorgegebener Durchmesser der Injektionsrohre.

Mit diesen Voraussetzungen konnte dann der Druckverlauf über die Injektionszeit in Abhängigkeit der Injektionsdauer anhand der tiefenabhängigen Bohrlochdurchmesser der Varianten gemäß Fig. 1 bis Fig. 3 berechnet werden. Die daraus resultierenden Graphen für die drei Varianten sind in Fig. 4 dargestellt. Der Übersicht halber ist der Druckbereich in Fig. 4 von 10 bar bis 20 bar gespreizt, da bis 13,5 bar lediglich ein steiler Anfangsdruckaufbau erfolgt.

Für das Bohrloch 1 (Fig. 1) ergibt sich nach Erreichen des erforderlichen Injektionsdrucks bei ca. 13,5 bar ein linearer Druckanstieg mit der Zeit bis bei ca. 1.200 Sekunden das Bohrloch vollständig verfüllt ist.

Für die Bohrlochvariante 2 (Fig. 2) mit dem größeren Radius im mittleren Tiefenbereich ergibt sich eine deutliche Veränderung der Injektionsdruckkurve mit einem flacheren Druckanstieg im Bereich zwischen ca. 500 Sekunden bis 1.000 Sekunden. Die Knickpunkte der Kurve entsprechen dabei den Tiefenlagen der Radiusänderungen im Bohrloch.

Für die dritte Bohrlochvariante (Fig. 3), die über die gesamte Länge den größeren Radius von 80 mm hat, ergibt sich die Injektionsdruckkurve, die in Fig. 4 mit Nr. 3 gekennzeichnet ist. Erwartungsgemäß steigt der Injektionsdruck aufgrund des größeren zu verfüllenden Volumens langsamer an.

Der Absolutwert von ca. 13,5 bar des anfänglichen Injektionsdruckes ist hier vor allem eine Funktion der Viskosität des Hinterfüllungsmaterials und daher in den hier berechneten Varianten im wesentlichen übereinstimmend. Daher kann die Viskosität des Hinterfüllungsmaterials auch sehr gut anhand der ermittelten Messwerte bei einer In-situ-Messung skaliert werden.

## Patentansprüche

1. Verfahren zur Hinterfüllung eines in ein Bohrloch eingebrachten Funktionselementes, bei dem ein Hinterfüllungsmaterial über wenigstens ein zum Fuss des Funktionselementes, bevorzugt bis zur Bohrlochsohle, geführtes Injektionsrohr von einer außerhalb des Bohrlochs angeordneten Injektionspumpe in das Bohrloch injiziert wird, wobei während des Injektionsvorgangs der Injektionsdruck und die Injektionsrate gemessen werden, **dadurch gekennzeichnet, dass** aus in Abhängigkeit der Injektionsdauer über den gesamten Hinterfüllungsvorgang fortlaufend gemessenen Injektionsdruck und Injektionsrate geometrische oder physikalische Eigenschaften des Bohrlochs, des Untergrunds und/oder des Hinterfüllungsmaterials bestimmt werden.

2. Verfahren nach Anspruch 1, **dadurch gekennzeichnet, dass** die Dichte und Viskosität des Hinterfüllungsmaterials gemessen werden.

3. Verfahren nach Anspruch 1, **dadurch gekennzeichnet, dass** die Dichte und Viskosität des Hinterfüllungsmaterials aus den gemessenen Daten für Injektionsdruck und Injektionsrate rechnerisch abgeleitet werden.

4. Verfahren nach einem der vorangehenden Ansprüche, **dadurch gekennzeichnet, dass** aus den gemessenen Daten der tiefenabhängige Bohrlochdurchmesser bestimmt wird.

5. Verfahren nach einem der vorangehenden Ansprüche, **dadurch gekennzeichnet, dass** aus den gemessenen Daten die Tiefenlage von durchlässigen Klüften bestimmt wird.

6. Verfahren nach einem der vorangehenden Ansprüche, **dadurch gekennzeichnet, dass** aus den gemessenen Daten das aufgenommene Volumen an Hinterfüllungsmaterial in den durchlässigen Klüften bestimmt wird.

7. Verfahren nach einem der vorangehenden Ansprüche, **dadurch gekennzeichnet, dass** aus den gemessenen Daten Eigenschaften des eingebauten Funktionselementes bestimmt werden.

8. Verfahren nach einem der vorangehenden Ansprüche, **dadurch gekennzeichnet, dass** aus den gemessenen Daten die Rauhigkeit der Bohrlochwand bestimmt wird.

9. Z Anordnung zur Durchführung des Verfahrens nach einem der vorangehenden Ansprüche, mit - einem Bohrloch, - einem im Bohrloch eingeführten Funktionselement, - wenigstens einem Injektionsrohr im Bohrloch, das bis zum Fuss des Funktionselementes, bevorzugt bis zur Bohrlochsohle führt, - einer Injektionspumpe, die außerhalb des Bohrlochs angeordnet ist, mit einem Hinterfüllungsmaterial beaufschlagbar ist und an der das wenigstens eine Injektionsrohr angeschlossen ist, wobei zwischen Injektionspumpe und Injektionsrohr mindestens ein Drucksensor und mindestens ein Fließratensensor angeordnet sind, **dadurch gekennzeichnet, dass** zwischen Injektionspumpe und Injektionsrohr eine Dichte- und Viskositätsmessvorrichtung angeordnet ist sowie Erfassungs- und Auswertemittel mit Wirkverbindungen zum Drucksensor und zum Fließratensensor vorgesehen sind, die dafür ausgelegt sind, aus in Abhängigkeit der Injektionsdauer über den gesamten Hinterfüllungsvorgang fortlaufend gemessenen Injektionsdruck und Injektionsrate geometrische oder physikalische Eigenschaften des Bohrlochs, des Untergrunds und/oder des Hinterfüllungsmaterials zu bestimmen, wobei das Bohrloch als Erdwärmesonde ausgebildet ist.

## Claims

1. A method for backfilling a functional element introduced into a borehole, in which a backfill material is injected into the borehole via at least one injection tube which is guided to the foot of the functional element, preferably as far as the borehole bottom, of an injection pump arranged outside the borehole, wherein during the injection operation the injection pressure and the injection rate are measured, **characterised in that** geometric or physical properties of the borehole, the subsoil and/or the backfill material are determined from the injection pressure and injection rate which are continuously measured over the entire backfilling operation dependent on the duration of injection.

2. A method according to Claim 1, **characterised in that** the density and viscosity of the backfill material are measured.

3. A method according to Claim 1, **characterised in that** the density and viscosity of the backfill material are derived by calculation from the measured data for injection pressure and injection rate.

4. A method according to one of the preceding claims, **characterised in that** the depth-dependent borehole diameter is determined from the measured data.

5. A method according to one of the preceding claims, **characterised in that** the depth position of permeable fissures is determined from the measured data.

6. A method according to one of the preceding claims, **characterised in that** the volume of backfill material taken up in the permeable fissures is determined from the measured data.

7. A method according to one of the preceding claims, **characterised in that** properties of the incorporated functional element are determined from the measured data.

8. A method according to one of the preceding claims, **characterised in that** the roughness of the borehole wall is determined from the measured data.

9. An arrangement for carrying out the method according to one of the preceding claims, with - a borehole, - a functional element introduced in the borehole, - at least one injection tube in the borehole which leads to the foot of the functional element, preferably as far as the borehole bottom, - an injection pump which is arranged outside the borehole, can be supplied with a backfill material and to which the at least one injection tube is connected, wherein at least one pressure sensor and at least one flow-rate sensor are arranged between the injection pump and injection tube, **characterised in that** between the injection pump and injection tube there is arranged a density and viscosity measuring device and also there are provided detection and evaluation means with operative connections to the pressure sensor and to the flow-rate sensor which are designed to determine geometric or physical properties of the borehole, the subsoil and/or the backfill material from the injection pressure and injection rate which are continuously measured over the entire backfilling operation dependent on the duration of injection, the borehole being formed as a geothermal probe.

## Revendications

1. Procédé pour remblayer un élément fonctionnel dans un trou de forage, dans lequel un matériau de remblayage est injecté dans le trou de forage par une pompe d'injection située à l'extérieur du trou de forage au moyen d'au moins un conduit d'injection introduit jusqu'au pied de l'élément fonctionnel, de préférence jusqu'au fond du trou de forage, la pression d'injection et la vitesse d'injection étant mesurées durant la procédure d'injection, **caractérisé en ce que** des propriétés géométriques ou physiques du trou de forage, du sous-sol et/ou du matériau de remblayage sont déterminées en fonction de la durée de remblayage sur la base de la pression d'injection et de la vitesse d'injections mesurées en continu durant toute la durée de la procédure de remblayage.

2. Procédé selon la revendication 1, **caractérisé en ce que** la densité et la viscosité du matériau de remblayage sont mesurées.

3. Procédé selon la revendication 1, **caractérisé en ce que** la densité et la viscosité du matériau de remblayage sont déduites par calcul des données mesurées pour la pression d'injection et la vitesse d'injection.

4. Procédé selon l'une des revendications précédentes, **caractérisé en ce que** le diamètre du trou de forage en fonction de la profondeur est déterminé à partir des données mesurées.

5. Procédé selon l'une des revendications précédentes, **caractérisé en ce que** la profondeur de failles perméables est déterminée à partir des données mesurées.

6. Procédé selon l'une des revendications précédentes, **caractérisé en ce que** le volume de matériau de remblayage reçu dans les failles perméables est déterminé à partir des données mesurées.

7. Procédé selon l'une des revendications précédentes, **caractérisé en ce que** des propriétés de l'élément fonctionnel installé sont déterminées à partir des données mesurées.

8. Procédé selon l'une des revendications précédentes, **caractérisé en ce que** la rugosité de la paroi du trou de forage est déterminée à partir des données mesurées.

9. Dispositif de mise en oeuvre du procédé selon l'une des revendications précédentes, comportant
- un trou de forage,
- un élément fonctionnel introduit dans le trou de forage,
- au moins un conduit d'injection dans le trou de forage qui mène jusqu'au pied de l'élément fonctionnel, de préférence jusqu'au fond du trou de forage,
- une pompe d'injection qui est disposée à l'extérieur du trou de forage, est alimentée avec un matériau de remblayage et à laquelle est raccordé le au moins un conduit d'injection, un capteur de pression et un capteur de vitesse d'écoulement étant disposés entre la pompe d'injection et le conduit d'injection,
**caractérisé en ce que**
un dispositif de mesure de la densité et de la viscosité est disposé entre la pompe d'injection et le conduit d'injection, et des moyens de saisie et d'exploitation reliés fonctionnellement au capteur de pression et au capteur de vitesse d'écoulement sont prévus et sont conçus pour déterminer des propriétés géométriques ou physiques du trou de forage, du sous-sol et/ou du matériau de remblayage sur la base de la pression d'injection et de la vitesse d'injections mesurées en continu durant toute la durée de la procédure de remblayage en fonction de la durée de remblayage, le trou de forage étant réalisé sous la forme d'une sonde géothermique.
